# FASCICULE DE BREVET EUROPEEN

(11) **EP 3 885 592 B1**
(45) Date de publication et mention de la délivrance du brevet: **14.09.2022**
(21) Numéro de dépôt: 21165290.4
(22) Date de dépôt: 26.03.2021
(51) Int. Cl.: F16C 1/14, F16D 51/28, F16C 1/26

(54) **AGENCEMENT POUR LE MONTAGE EN AVEUGLE D'UN CÂBLE DE FREIN SUR UN LEVIER D'ACTIONNEMENT D'UN FREIN À TAMBOUR DE VÉHICULE AUTOMOBILE ET PROCÉDÉ DE MONTAGE**
BLINDMONTAGEANORDNUNG EINES BREMSSEILS AN EINEM BETÄTIGUNGSHEBEL EINER KRAFTFAHRZEUG-TROMMELBREMSE UND MONTAGEVERFAHREN
ARRANGEMENT FOR BLIND MOUNTING OF A BRAKE CABLE ON AN ACTUATING LEVER OF A MOTOR VEHICLE DRUM BRAKE AND MOUNTING METHOD

(30) Priorité: 27.03.2020 FR 2003010
(43) Date de publication de la demande: 29.09.2021
(73) Titulaire: Foundation Brakes France, 93700 Drancy (FR)
(72) Inventeur: LEVASSORT, Ludovic, 95630 MERIEL (FR); GUIGNON, Cédric, 94510 LA QUEUE EN BRIE (FR); TISSIER, Grégory, 75011 PARIS (FR)
(74) Mandataire: IPAZ

(56) Documents cités:
- FR-A1- 3 013 405
- US-A- 4 872 533

## Description

L'invention se rapporte à un agencement pour le montage en aveugle sur un levier d'actionnement d'un frein à tambour de véhicule automobile, d'un câble de frein qui comporte une extrémité libre pourvue d'un embout de retenue de diamètre supérieur au câble, l'agencement comprenant le levier d'actionnement pourvu d'une extrémité de sollicitation sur laquelle l'extrémité libre du câble est fixable pour faire pivoter le levier d'actionnement lors d'une traction du câble de frein, le levier d'actionnement présentant un logement de réception pour l'extrémité libre du câble de frein, ledit logement présentant une extrémité d'entrée et une extrémité de sortie pour le câble de frein et un élément de fixation de ladite extrémité libre du câble de frein dans le logement de réception, l'élément de fixation étant constitué d'un manchon engagé dans le logement de réception et configuré pour l'introduction et le passage de l'embout du câble au travers du manchon et du logement, et d'au moins deux éléments définissant entre eux un passage pour le câble de frein et élastiquement déformables pour permettre le passage et la sortie de l'embout du câble et être rappelées élastiquement vers le câble une fois l'embout passé, lesdits éléments élastiquement déformables étant configurés pour constituer également des moyens de butée de l'élément de fixation sur l'extrémité de sortie du logement de réception. L'invention consiste en ce que le levier d'actionnement comporte au voisinage de l'extrémité de sortie du logement de réception, un organe de butée agencé pour limiter la course de l'élément de fixation monté dans le logement de réception entre une position où les moyens de butée dudit élément de fixation sont en butée contre l'extrémité de sortie du logement de réception et une position où lesdits moyens de butée de l'élément de fixation sont en partie en butée contre ledit organe de butée, tout en autorisant le passage de l'embout de câble de frein au-delà de l'élément de fixation, lorsque celui-ci est en butée contre ledit organe de butée.

L'invention se rapporte également à un procédé d'assemblage à l'aveugle d'un câble de frein sur un levier d'actionnement d'un frein à tambour comportant un agencement selon l'invention ainsi que le frein à tambour comportant un tel agencement.

Le domaine de l'invention est le domaine automobile et plus particulièrement un agencement pour le montage d'un câble de frein sur un levier d'actionnement d'un frein à tambour pour véhicule automobile tel que décrit dans le document FR 3 013 405 A1.

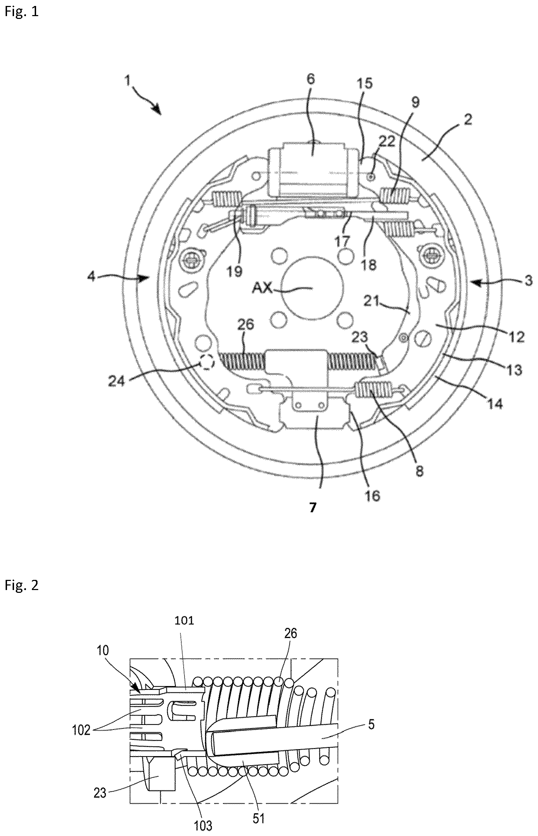

Un frein à tambour est un organe de freinage qui est agencé dans un véhicule pour ralentir, voire bloquer la rotation de la roue par friction. Ainsi, un frein à tambour 1 de ce type tel que représenté sur la figure 1 peut être utilisé en tant que frein de service pour ralentir ou pour stopper le véhicule, et aussi en tant que frein de stationnement pour assurer l'immobilisation du véhicule en stationnement.

Un tel frein à tambour 1 comporte un plateau fixe 2 ayant une face interne à laquelle sont fixés un cylindre de roue 6 et un organe d'appui appelé point fixe 7, à des positions diamétralement opposées. Ce plateau 2 porte un premier et un second segments 3 et 4 ayant des extrémités rappelées en appui sur le cylindre de roue 6 et sur le point fixe 7 par deux ressorts 8 et 9 pour les enserrer l'un et l'autre. Le premier segment 3 comporte une âme 12 en tôle ayant une forme de portion de couronne, au bord externe de laquelle est soudée ou sertie une semelle usuellement appelée jante 13 en tôle cintrée cylindriquement qui porte une garniture de freinage 14. Cette âme 12 comporte une extrémité 15 en appui sur un piston du cylindre de roue 6, et une autre extrémité 16 en appui sur le point fixe 7. Le second segment 4 a la même structure générale.

Ces segments 3 et 4 sont mobiles radialement pour être pressés contre une face interne d'un tambour rotatif de roue de façon à générer un couple de freinage. Le cylindre de roue 6 comprend une chambre fermée par deux pistons qui s'écartent sur augmentation de la pression hydraulique, pour écarter les extrémités des segments 3, 4. Complémentairement, une biellette de rattrapage d'usure 17 longe le cylindre de roue 6 en ayant une extrémité 18 en appui sur un levier 21 porté par le premier segment et une autre extrémité 19 en appui sur l'âme du second segment lorsque le frein est au repos. Cette biellette 17 intègre un mécanisme qui accroît sa longueur au fil de l'usure des garnitures, pour que la course de la commande du frein reste inchangée au cours de la vie du frein.

Un levier 21 porté par l'âme 12 du segment 3 est actionné par une commande de frein de stationnement. Ce levier 21 comporte une extrémité liée en rotation par une liaison 22 à une première extrémité de l'âme 12, et une autre extrémité libre 23 à laquelle est solidarisée une tête de câble de frein non visible sur la figure 1. Ce levier 21 est en appui au voisinage de la liaison 22 sur l'extrémité 18 de la biellette 17. Lorsque le câble est mis sous tension, il tire l'extrémité libre 23 du levier 21 qui s'écarte alors de la jante 13, pour appuyer sur la biellette 17 afin d'écarter les segments 3 et 4 de manière à les presser contre le tambour.

### ETAT DE LA TECHNIQUE

Après montage d'un frein de ce type sur un véhicule, l'accouplement du câble au levier 21 est réalisé en aveugle, le plateau 2 étant en place dans le tambour. Ce montage est assuré en engageant en premier lieu l'extrémité avant de ce câble 5 munie d'un embout 51, à travers une face externe du plateau 2, dans un trou 24 prévu à cet effet qui est situé approximativement en vis-à-vis du second segment 4. Cette extrémité de câble 5 est ensuite guidée par une gaine 26 portée par le plateau 2 du côté de sa face interne, vers l'extrémité 23. En poursuivant ce cheminement, l'extrémité de câble 5 est fixée sur l'extrémité 23 du levier 21 au travers d'un orifice de passage ménagé sur ladite extrémité, à l'aide d'un élément de fixation 10 qui est monté entre le câble 5 et l'orifice de passage du levier 21 (cf. figure 2).

Cet élément de fixation 10 comporte un manchon 101 présentant un orifice d'extrémité arrière dit d'entrée dans lequel l'extrémité avant du câble 5 munie de l'embout 51 est engagée (voir la figure 2) et un orifice d'extrémité avant dit de sortie par lequel fait saillie l'embout 51 du câble 5. La portion d'extrémité avant du manchon 101 est formée d'au moins deux pattes axiales 102 flexibles susceptibles d'occuper une position écartée radialement pour permettre le passage de l'embout 51 de l'extrémité avant du câble 5 à travers l'orifice d'extrémité avant, chaque patte 102 étant rappelée élastiquement vers le câble 5 dans une position resserrée dans laquelle la section de l'orifice d'extrémité avant est réduite à l'arrière de l'embout 51, pour interdire le retrait dudit embout 51. L'extrémité arrière du manchon 101 comporte au moins un ergot 103 en saillie radiale vers l'extérieur qui est susceptible de limiter le coulissement axial de l'élément de fixation 10, par rapport au levier d'actionnement 21 et chaque ergot 103 présente une rampe pour permettre l'insertion axiale par emboîtement élastique du manchon 101 dans l'orifice de passage du levier d'actionnement 21, le manchon 101 étant limité en coulissement axial dans l'orifice de passage du levier 21 d'un débattement déterminé.

Ainsi, on met en place l'élément de fixation 10 par son extrémité dite arrière dans l'orifice de passage du levier 21 de sorte que le câble 5 de frein reçu dans la gaine souple 26 du frein à tambour, débouche en regard de l'orifice d'extrémité arrière de l'élément de fixation 10 logé dans l'orifice de passage du levier d'actionnement 21. Une fois l'embout 51 engagé dans le manchon 101 de l'élément de fixation 10, la poussée exercée sur le câble 5 entraîne également en déplacement l'élément de fixation 10 dans l'orifice de passage. Les ergots 103 ménagés sur le manchon 101 de l'élément de fixation 10 viennent ensuite en butée contre le pourtour du passage du levier 21 et bloque le manchon 101 ce qui permet ainsi à l'embout 51 du câble 5 de se déplacer par rapport au manchon 101 bloqué dans le passage du levier 21 et d'écarter les pattes flexibles 102 pour continuer sa course. Une fois que l'embout 51 a dépassé les pattes flexibles 102, celles-ci se rétractent et se bloquent à l'arrière de l'embout 51. Si on exerce une traction sur le câble 5, l'embout 51 vient alors avec sa face arrière de retenue contre les extrémités de pattes flexibles 102 et contre le levier 21 ce qui permet, par traction sur le câble 5, l'actionnement du levier 21 et son entraînement en pivotement.

Selon cet agencement, le levier 21 présente une extrémité repliée à angle droit par rapport au corps du levier 21 pour constituer une languette 23 comportant l'orifice de passage dans lequel est engagé le câble 5 au travers de l'élément de fixation 10.

Bien qu'un tel agencement permette une facilitation pour le montage en aveugle du câble de frein 5, il présente encore des inconvénients. En effet, la gaine 26 au travers de laquelle est engagé le câble pour venir sur le levier 21 présente un diamètre généralement supérieur à celui de l'élément de fixation 10 ce qui peut alors provoquer la mise en butée de l'extrémité du câble 5 entre l'extrémité de l'élément de fixation 10 et la gaine 26 comme cela est visible à la figure 2, bloquant ainsi l'embout et empêchant ainsi l'engagement correct du câble 5. En effet, une fois l'élément de fixation 10 en butée par ses ergots 103 dans l'orifice du levier 21, il est difficile d'engager le câble 5 dans ledit élément de fixation 10.

Dans ce cas, il est nécessaire de démonter le frein afin de l'ouvrir pour accéder à l'extrémité avant de câble de manière à la débloquer.

### EXPOSE DE L'INVENTION

La présente invention a donc pour but de proposer un agencement permettant de pallier ces inconvénients. En particulier, l'invention a pour objet un agencement dans lequel les risques de blocages de l'extrémité avant du câble sont limités.

A cet effet, l'invention a pour objet un agencement pour le montage en aveugle sur un levier d'actionnement d'un frein à tambour de véhicule automobile, d'un câble de frein qui comporte une extrémité libre pourvue d'un embout de retenue de diamètre supérieur au câble, l'agencement comprenant le levier d'actionnement pourvu d'une extrémité de sollicitation sur laquelle l'extrémité libre du câble est fixable pour faire pivoter le levier d'actionnement lors d'une traction du câble de frein, le levier d'actionnement présentant un logement de réception pour l'extrémité libre du câble de frein, ledit logement de réception présentant une extrémité d'entrée et une extrémité de sortie pour le câble de frein et un élément de fixation de ladite extrémité libre du câble de frein dans le logement de réception, l'élément de fixation étant constitué d'un manchon engagé dans le logement de réception et configuré pour l'introduction et le passage de l'embout du câble au travers du manchon et du logement de réception, et d'au moins deux éléments définissant entre eux un passage pour le câble de frein et élastiquement déformables pour permettre le passage et la sortie de l'embout du câble et être rappelées élastiquement vers le câble une fois l'embout passé, lesdits éléments élastiquement déformables étant configurés pour constituer également des moyens de butée de l'élément de fixation sur l'extrémité de sortie du logement de réception, caractérisé en ce que le levier d'actionnement comporte au voisinage de l'extrémité de sortie du logement de réception, un organe de butée agencé pour limiter la course de l'élément de fixation monté dans le logement de réception entre une position où les moyens de butée dudit élément de fixation sont en butée contre l'extrémité de sortie du logement de réception et une position où lesdits moyens de butée de l'élément de fixation sont en partie en butée contre ledit organe de butée, tout en autorisant le passage d'un embout de câble de frein au-delà de l'élément de fixation, lorsque celui-ci est en butée contre ledit organe de butée.

Ainsi, de manière avantageuse, lorsque l'embout de l'extrémité de câble de frein est engagé dans l'extrémité d'entrée de l'élément de fixation monté dans le logement de réception, ledit embout peut se déplacer dans le logement de réception au travers de l'élément de fixation vers l'extrémité de sortie avec le câble engagé dedans. Une fois en butée contre les éléments élastiquement déformables de l'élément de fixation, l'embout repousse ledit élément de fixation et l'extrémité de sortie dudit élément de fixation vient en butée contre l'organe de butée du levier d'actionnement en saillie dans l'axe de déplacement. Ainsi, l'engagement du câble se poursuit dans l'élément de fixation tandis que celui-ci reste immobile en butée contre l'organe de butée, l'embout pouvant alors sortir de l'élément de fixation en écartant les éléments élastiquement déformables qui se replacent ensuite à l'arrière de l'embout. De ce fait, si on exerce ensuite une traction sur le câble, l'embout revient en butée avec sa face arrière contre l'extrémité de sortie de l'élément de fixation qui vient elle-même en butée contre le levier d'actionnement, plus précisément l'extrémité de sortie du logement de réception, retenant l'embout qui est ainsi fixé sur le levier d'actionnement.

Comme l'extrémité de sortie de l'élément de fixation est en butée contre l'extrémité de sortie du logement de réception, ledit élément de fixation est engagé par son extrémité d'entrée dans l'extrémité de sortie du logement de réception. Il peut même alors faire saillie du côté extrémité d'entrée du logement de réception. Lorsqu'on souhaite engager l'embout dans l'élément de réception, si l'embout ne s'engage pas d'emblée dans ledit élément de fixation et bute contre l'extrémité d'entrée de celui-ci, il n'existe plus de risque de blocage de cet embout, puisque l'élément de fixation peut coulisser librement dans le logement de réception. On élimine ainsi les risques de blocage de l'embout.

De manière avantageuse, le levier d'actionnement d'un agencement selon l'invention est généralement formé par une plaque oblongue d'épaisseur « e » et présente une extrémité du levier destinée à être montée en rotation par une liaison et son autre extrémité libre constitue l'extrémité de sollicitation destinée à être solidarisée à l'extrémité avant du câble de frein.

Le logement de réception est ménagé à l'extrémité de sollicitation du levier d'actionnement avec son axe entre l'entrée et la sortie du logement de réception qui s'étend principalement perpendiculairement à l'axe principal du levier d'actionnement, la traction exercée sur le câble de frein selon cet axe entraînant le levier d'actionnement en pivotement à son extrémité opposée et actionnant, de ce fait, le frein de stationnement.

Selon un premier mode de réalisation de l'invention, le logement de réception est une pièce rapportée sur l'extrémité de sollicitation du levier d'actionnement, tel qu'un élément tubulaire par exemple collé, soudé sur une face de ladite extrémité de sollicitation.

Selon un deuxième mode de réalisation, le logement de réception est réalisé d'une pièce avec le levier d'actionnement. Ainsi, le logement de réception est constitué d'une languette s'étendant selon l'axe longitudinal principal du levier d'actionnement à l'extrémité de sollicitation dudit levier d'actionnement et repliée sur elle-même pour former un logement tubulaire se trouvant sur une face du levier et dont l'axe principal est principalement perpendiculaire à l'axe longitudinal du levier. De préférence, l'extrémité du levier est découpée de manière à présenter la languette qui une fois repliée constitue le logement de réception. De préférence, le logement de réception est de section circulaire.

Le levier d'actionnement comporte en outre un organe de butée ménagé au voisinage de l'extrémité de sortie du logement de réception. Cet organe de butée est configuré pour limiter la course axiale de l'élément de fixation monté dans le logement de réception entre une position où l'extrémité de sortie dudit élément de fixation est en butée contre l'extrémité de sortie du logement de réception et une position où ladite extrémité de sortie de l'élément de fixation est en butée contre ledit organe de butée, tout en autorisant le passage de l'embout de câble de frein au travers de l'extrémité de sortie de l'élément de fixation, lorsque celui-ci est en butée contre ledit organe de butée.

De manière avantageuse, selon un mode de réalisation, l'organe de butée est une pièce rapportée sur le levier d'actionnement, tel qu'un pion fixé par collage, soudage, sur la face du levier d'actionnement où se trouve également le logement de réception.

Selon un autre mode de réalisation, de manière très avantageuse, cet organe de butée est constitué d'une pièce avec le levier d'actionnement par exemple sous forme d'un bossage ménagé en relief sur la face du levier d'actionnement au voisinage de l'extrémité de sortie du logement de réception. Ce bossage peut être réalisé par déformation de la plaque constituant le levier d'actionnement.

De manière encore plus avantageuse, cet organe de butée est constitué d'une pièce avec le levier d'actionnement, sous forme d'une patte qui s'étend selon l'axe longitudinal principal du levier d'actionnement, de préférence dans le même plan que la languette formant le logement de réception et écartée de celle-ci. Cette patte est pliée pour s'étendre de manière oblique en saillie sur la face du levier dans laquelle se trouve également le logement de réception. Ainsi de manière avantageuse, on propose un agencement en partie constitué d'une pièce avec le levier d'actionnement lui-même.

Selon un mode de réalisation préféré, l'élément de fixation du câble de frein sur le levier, comprend un manchon dont le diamètre extérieur correspond au diamètre intérieur du logement tubulaire, et le diamètre intérieur du manchon permet l'entrée et le passage de l'embout du câble de frein. Ce manchon présente ainsi une extrémité d'entrée pour le câble et à son autre extrémité dite de sortie est pourvu d'au moins deux éléments définissant entre eux un passage de diamètre correspondant au diamètre du câble de frein. Ces éléments sont élastiquement déformables pour permettre le passage et la sortie de l'embout du câble et pour être rappelés élastiquement vers le câble une fois l'embout passé. Ces éléments sont configurés pour constituer également des moyens de butée de l'élément de fixation sur le levier d'actionnement.

De préférence, ces éléments élastiquement déformables sont constitués d'au moins deux, de préférence cinq, pattes flexibles s'étendant depuis l'extrémité du manchon.

Chaque patte s'étendant depuis le manchon est configurée pour définir avec les autres un passage dont le diamètre intérieur diminue depuis une valeur correspondant au diamètre intérieur du manchon jusqu'à une section dont le diamètre correspond au diamètre du câble de frein lui-même. L'extrémité de chacune des pattes est ensuite conformée pour définir une extrémité de sortie dont le diamètre extérieur est supérieur à celui de l'extrémité de sortie du logement de réception, constituant ainsi des moyens de butée contre ladite extrémité de sortie du logement de réception mais également des moyens de butée pouvant venir en butée contre l'organe de butée du levier d'actionnement.

Ces pattes sont élastiquement déformables de sorte à pouvoir s'écarter radialement pour laisser passer l'embout du câble engagé dans l'élément de fixation et être rappelées en position autour du câble une fois l'embout passé. Les moyens de butée des pattes se logent alors derrière l'embout de retenue.

Les moyens de butée formés par les extrémités des pattes forment une couronne de butée dont le diamètre est supérieur au diamètre intérieur du logement de réception. L'élément de fixation peut ainsi être engagé dans le logement de réception par son extrémité d'entrée tandis que son extrémité de sortie vient en butée contre le pourtour du logement de réception. La couronne de butée vient en butée l'organe de butée du levier d'actionnement tout en autorisant la déformation des pattes pour la course de l'embout du câble.

L'invention concerne également un frein à tambour de véhicule automobile, comportant un agencement pour le montage en aveugle sur un levier d'actionnement du frein à tambour d'un câble de frein qui comporte une extrémité libre pourvue d'un embout de retenue de diamètre supérieur au câble.

L'invention propose aussi un procédé de montage dudit agencement selon l'invention, caractérisé en ce qu'il comporte une étape de montage dans laquelle l'élément de fixation est inséré dans le logement de réception du levier d'actionnement, l'extrémité d'entrée dudit élément de fixation étant introduite dans le logement de réception par son extrémité de sortie, tandis que l'extrémité de sortie présentant les moyens de retenue vient en butée contre l'extrémité de sortie du logement de réception.

L'invention se rapporte également à un procédé d'assemblage en aveugle d'un câble de frein sur un frein à tambour comportant un agencement selon l'invention, dans lequel on engage l'extrémité avant du câble munie d'un embout, à travers un trou prévu dans une face externe du plateau du frein à tambour, cette extrémité de câble étant ensuite guidée par une gaine portée par le plateau du côté de sa face interne, vers l'extrémité de sollicitation d'un levier d'actionnement, caractérisé en ce qu'on engage l'embout du câble de frein dans le logement de réception prévu à l'extrémité de sollicitation du levier, l'embout du câble s'engageant également dans l'élément de fixation engagé dans ledit logement de réception, l'embout venant en butée contre l'extrémité de sortie dudit élément de fixation et repoussant celui-ci jusqu'à ce qu'il vienne en butée contre un organe de butée prévu sur le levier, l'extrémité de l'élément de fixation en butée et retenue par l'organe de butée étant en outre élastiquement déformable laissant passer l'embout du câble sur lequel une poussée est exercée, et revenant en position à l'arrière dudit embout, une traction exercée alors sur le câble ramenant l'embout et l'élément de fixation en butée contre l'extrémité de sortie du logement de réception, l'extrémité du câble étant ainsi fixée.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés qui représentent :
[Fig. 1] une vue en plan d'un frein à tambour selon l'invention qui est destiné à être monté sur une roue de véhicule automobile ;
[Fig. 2] une vue en coupe d'un agencement de montage à l'aveugle d'un câble de frein selon l'état de la technique
[Fig. 3] une vue en coupe d'un agencement de montage à l'aveugle d'un câble de frein selon la présente invention
[Fig. 4] une vue en perspective de l'extrémité du levier d'entraînement d'un agencement selon l'invention ;
[Fig. 5] une vue en perspective de l'élément de fixation pour un agencement selon l'invention ;
[Fig. 6A] ;
[Fig. 6B] ;
[Fig. 6C] ;
[Fig. 6D] ;

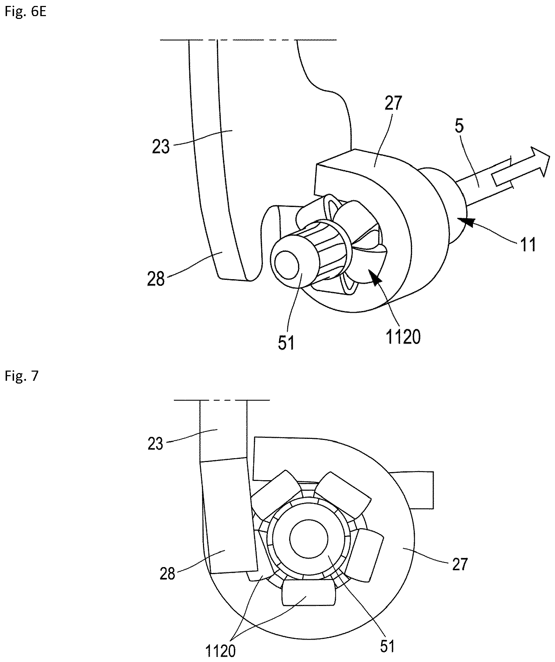

[Fig. 6E] des vues en perspectives d'un agencement selon l'invention à différentes étapes de montage ; et
[Fig. 7] une vue en perspective de face d'un agencement selon l'invention, une fois le câble fixé.

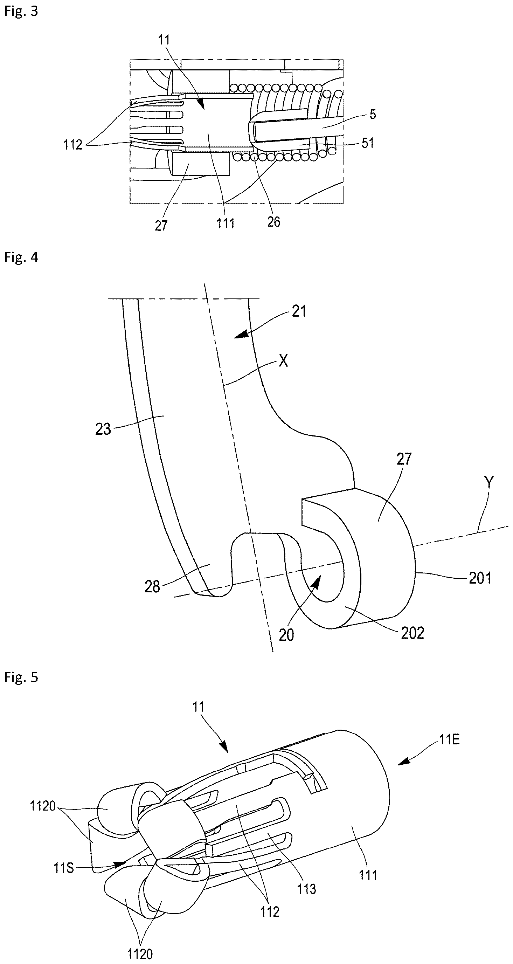

Un agencement selon l'invention est représenté sur la figure 3. On peut y voir un élément de fixation 11 engagé dans un logement de réception 20 ménagé sur l'extrémité de sollicitation du levier 21 et à une extrémité desquels débouche l'extrémité d'une gaine 26 permettant de guider l'extrémité libre d'un câble de frein 5 muni d'un embout 51.

Ainsi, dans l'exemple représenté, le levier d'actionnement 21 d'un agencement selon l'invention est formé par une plaque oblongue d'épaisseur « e » et d'axe longitudinal X, destiné à s'étendre, une fois monté dans le frein à tambour, dans un plan vertical transversal comme on peut le voir à la figure 1. Une extrémité du levier d'actionnement 21 est montée liée en rotation par une liaison à une première extrémité et son autre extrémité libre 23, cf la figure 4, est solidarisée à une extrémité avant ou tête d'un câble de frein 5. Cette extrémité libre 23 est découpée de manière à présenter d'une part une languette 27 et une patte 28 s'étendant en saillie axiale, sensiblement parallèles et écartées l'une de l'autre comme on peut le voir sur la figure 4.

La languette 27 est repliée, de préférence enroulée sur elle-même en direction du levier 21 de telle sorte qu'elle définit sur une face de ce levier 21 un logement tubulaire 20, présentant de préférence une section circulaire. Ce logement tubulaire 20 présente une extrémité d'entrée 201 par laquelle l'extrémité du câble de frein 5 sera introduite et une extrémité de sortie 202. L'axe Y du logement de réception 20 s'étendant entre les extrémités dudit logement de réception 20 est sensiblement perpendiculaire à l'axe X du levier 21.

Dans ce logement de réception 20 est monté l'élément de fixation 11 d'un câble de frein 5. Cet élément de fixation 11, visible à la figure 5 est constitué d'un manchon 111 dont le diamètre extérieur correspond au diamètre intérieur du logement 20, le diamètre intérieur du manchon 111 correspondant lui au diamètre extérieur de l'embout 51 monté à l'extrémité avant libre du câble de frein 5. Ce manchon 111 présente ainsi une extrémité d'entrée 11E dans laquelle est engageable l'embout 51 du câble 5.

A l'extrémité opposée, qu'on appelle extrémité de sortie 11S, le manchon 111 est prolongé de cinq pattes flexibles 112. Chaque patte 112 s'étend depuis le manchon 111, configurée pour définir avec les autres un passage dont le diamètre intérieur diminue depuis une valeur correspondant au diamètre intérieur du manchon 111 jusqu'à une section dont le diamètre correspond au diamètre du câble 5 de frein lui-même.

L'extrémité de chacune des pattes 112 est ensuite conformée pour que cette extrémité de sortie 11S de l'élément de fixation 11 présente un diamètre extérieur supérieur au diamètre extérieur du manchon 111.L'extrémité de sortie 11S possède donc un diamètre intérieur correspondant sensiblement au diamètre du câble et un diamètre extérieur supérieur à celui de l'extrémité d'entrée 11E dudit élément de fixation 11 et donc à celui du logement de réception 20.

Dans l'exemple représenté, l'extrémité des pattes 112 est recourbée 1120 vers l'extérieur pour définir une extrémité de sortie 11S dont le diamètre extérieur est supérieur à celui de l'extrémité d'entrée 11E de l'élément de fixation 11. Ces extrémités recourbées 1120 forment des moyens de butée.

Ces pattes 112 sont en outre élastiquement déformables de sorte à pouvoir s'écarter radialement pour laisser passer l'embout 51 du câble 5 engagé dans l'élément de fixation 11 et être rappelées en position autour du câble 5 une fois l'embout 51 passé. Les pattes recourbées 112 se logent alors derrière l'embout de retenue 51.

On peut également prévoir des pattes 113 s'étendant dans le prolongement du manchon 111 et intercalées entre les pattes flexibles 112 pour optimiser le guidage de l'élément de fixation 11 lors de son déplacement dans le logement 20.

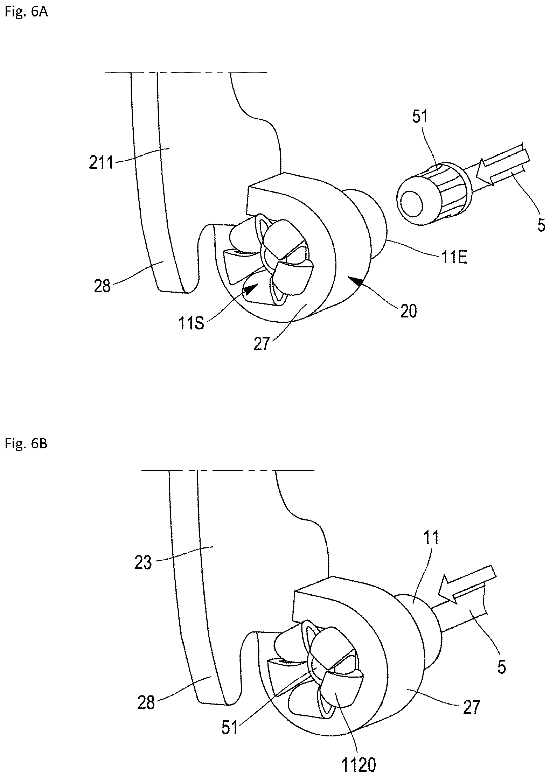

Lors de la mise en place sur l'extrémité 23 du levier 21, l'élément de fixation 11 est engagé par son extrémité d'entrée 11E dans le logement 20 défini par la languette 27, du côté de l'extrémité de sortie 202 dudit logement 20, les extrémités recourbées 1120 des pattes flexibles 112 forment des moyens de butée venant en butée contre ladite extrémité de sortie 202 dudit logement 20. L'extrémité d'entrée 11E du manchon 111, une fois l'élément de fixation 11 monté dans le logement 20, se trouve ainsi du côté de l'extrémité d'entrée 201 du logement 20 et peut accueillir l'extrémité avant d'un câble de frein 5 munie de l'embout 51 (voir la figure 3 ou 6A).

De manière à permettre le montage du câble 5 de frein de stationnement, on introduit celui-ci dans l'élément de fixation 11 monté dans le logement 20, côté extrémité d'entrée et on exerce une poussée sur le câble 5 de frein de stationnement pour l'engager dans l'élément de fixation 11 (voir la figure 3). La gaine 26 est de préférence raccordée autour de l'extrémité d'entrée 201 du logement 20 et présente un diamètre intérieur correspondant au diamètre extérieur du manchon 111 de l'élément de fixation 11. Ainsi, l'extrémité d'entrée 11E du manchon 111 débouche dans la gaine 26 quasiment sans décalage, entre le manchon 111 et la gaine 26.

Afin de limiter la course de déplacement de l'élément de fixation 11 par rapport au logement 20 du levier d'actionnement 21, le levier d'actionnement 21 comprend un organe de butée 28 interposé sur la trajectoire de l'élément de fixation 11, côté extrémité de sortie 11S de celui-ci. Ainsi, l'élément de fixation 11 avec son extrémité de sortie 11S vient en butée contre ledit organe de butée 28 ce qui stoppe le déplacement dudit élément de fixation 11 et évite la sortie dudit élément de fixation 11 hors du logement 20.

L'embout 51 engagé dans la gaine 26 peut alors s'engager facilement dans le manchon 111. Même si l'embout 51 bute sur le manchon 111 qui est en saillie dans la gaine 26, le manchon 111 coulisse dans le logement 20 et l'embout 51 ne risque plus d'être bloqué comme on peut le voir sur la figure 3.

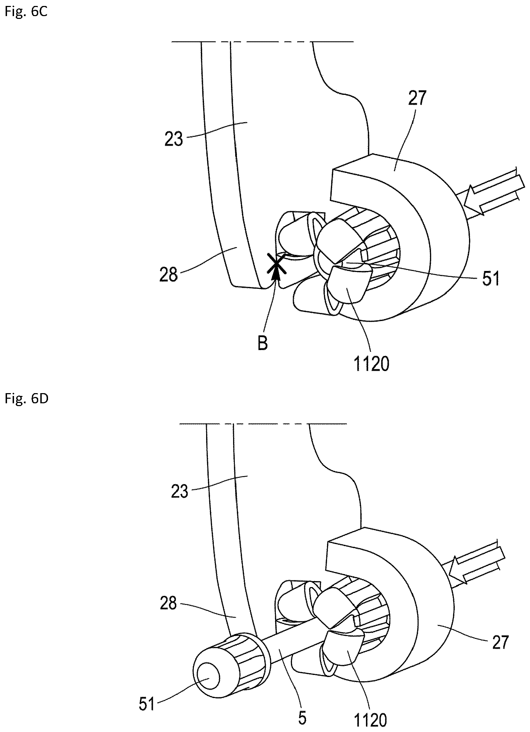

Une fois engagé dans le manchon 111, voir la figure 6B, l'embout 51 coulisse dans le manchon 111 et vient en butée contre les pattes flexibles 112 formant l'extrémité de sortie 11S de l'élément de fixation 11. Une fois en butée, l'embout 51 entraîne alors l'élément de fixation 11 en déplacement avec lui par rapport au logement 20 comme on peut le voir à la figure 6C.

Comme cela est visible aux figures 6C et 7, cet organe de butée est ici constitué de la patte 28 ménagée à l'extrémité 23 du levier 21 et repliée de manière à venir en saillie sur la trajectoire de l'élément de fixation 11 dans le prolongement du logement de fixation 20. Une fois, l'extrémité de l'élément de fixation 11 en butée contre l'organe de butée 28, si on continue à exercer une poussée sur le câble 5, l'embout 51 repousse les pattes flexibles 112 qui s'écartent radialement pour le laisser passer (cf figure 7). Une fois l'embout 51 passé, les pattes flexibles 112 sont rappelées en position et se logent autour du câble de frein 5 à l'arrière de l'embout 51 (voir la figure 6D).

L'extrémité 23 du levier d'actionnement 21 présente donc la patte repliée 28 qui définit un organe de butée contre lequel l'élément de fixation 11 vient en butée limitant ainsi la course de cet élément de fixation 11 tout en permettant l'engagement de l'embout 51 du câble 5 au travers des pattes flexibles 112 qu'il repousse. Une fois l'embout 51 passé, les pattes 112 se remettent en place autour du câble 5.

Il convient alors d'exercer une traction sur le câble de frein 5, la face arrière de l'embout 51 étant en butée contre l'extrémité 1120 des pattes 112 dudit élément de fixation, l'embout 51 est entraîné avec ledit élément de fixation 11 vers le logement 20 contre lequel ils viennent en butée. Le diamètre extérieur de l'extrémité de sortie 11S de l'élément de fixation 11 formée des extrémités 1120 des pattes 112 étant supérieur au diamètre du logement de réception 20, l'extrémité de sortie 11S de l'élément de fixation 11 vient en butée contre l'extrémité de sortie 202 du logement 20.

Le câble de frein 5 est ainsi retenu en traction dans le logement de fixation du levier 21 par l'embout 51 et l'extrémité 11S de l'élément de fixation 11 en butée contre le pourtour de l'extrémité de sortie 202 du logement 20, ce qui provoque le pivotement du levier 21 d'actionnement lors d'une traction du câble 5 de frein.

### Nomenclature

1 frein à tambour
2 plateau fixe
3 premier segment
4 second segment
5 câble de frein
51 embout de câble de frein
6 cylindre de roue
7 organe d'appui appelé point fixe
8-9 ressorts
10 élément de fixation de l'état de la technique
101 manchon
102 patte flexible
103 Ergot
11 élément de fixation
111 manchon
112 patte élastiquement déformable ; 1120 extrémité de la patte élastiquement déformable
113 patte rigide
11E extrémité d'entrée
11S extrémité de sortie
12 âme
13 semelle
14 garniture de freinage
15,16 extrémités de l'âme
17 biellette de rattrapage d'usure
18,19 extrémités de la biellette
20 logement de réception
201 extrémité d'entrée du logement de réception
202 extrémité de sortie du logement de réception
21 levier d'actionnement de frein de stationnement
22 liaison de l'extrémité du levier
23 extrémité libre du levier
24 trou
26 gaine
27 languette
28 organe de butée/patte

## Revendications

1. Agencement pour le montage en aveugle sur un levier d'actionnement (21) d'un frein à tambour (1) de véhicule automobile, d'un câble de frein (5) qui comporte une extrémité libre pourvue d'un embout de retenue (51) de diamètre supérieur au câble (5), l'agencement comprenant le levier d'actionnement (21) pourvu d'une extrémité de sollicitation (23) sur laquelle l'extrémité libre du câble (5) est fixable pour faire pivoter le levier d'actionnement (21) lors d'une traction du câble de frein (5), le levier d'actionnement (21) présentant un logement de réception (20) pour l'extrémité libre du câble de frein (5), ledit logement de réception (20) présentant une extrémité d'entrée (201) et une extrémité de sortie (202) pour le câble de frein et un élément de fixation (11) de ladite extrémité libre du câble de frein (5) dans le logement de réception (20), l'élément de fixation étant constitué d'un manchon (111) engagé dans le logement de réception (20) et configuré pour l'introduction et le passage de l'embout (51) du câble (5) au travers dudit manchon (111) et du logement (20), et d'au moins deux éléments (112) définissant entre eux un passage pour le câble de frein (5) et élastiquement déformables pour permettre le passage et la sortie de l'embout (51) du câble (5) et être rappelées élastiquement vers le câble (5) une fois l'embout (51) passé, lesdits éléments élastiquement déformables (112) étant configurés pour constituer également des moyens de butée (1120) de l'élément de fixation (11) sur l'extrémité de sortie (202) du logement de réception (20), **caractérisé en ce que** le levier d'actionnement (21) comporte au voisinage de l'extrémité de sortie (202) du logement de réception (20), un organe de butée (28) agencé pour limiter la course de l'élément de fixation (11) monté dans le logement de réception (20) entre une position où les moyens de butée (1120) dudit élément de fixation (11) sont en butée contre l'extrémité de sortie (202) du logement de réception (20) et une position où lesdits moyens de butée (1120) de l'élément de fixation (11) sont en partie en butée contre ledit organe de butée (28), tout en autorisant le passage de l'embout (51) de câble de frein au-delà de l'élément de fixation (11), lorsque celui-ci est en butée contre ledit organe de butée (28).

2. Agencement selon la revendication 1, **caractérisé en ce que** le logement de réception (20) est ménagé à l'extrémité de sollicitation (23) du levier d'actionnement (21) avec son axe (Y) entre l'entrée et la sortie du logement de réception (20) qui s'étend principalement perpendiculairement à l'axe principal (X) du levier d'actionnement (21).

3. Agencement selon l'une des revendications 1 ou 2, **caractérisé en ce que** le logement de réception (20) est une pièce rapportée sur l'extrémité de sollicitation (23) du levier d'actionnement (21), tel qu'un élément tubulaire collé ou soudé sur une face de ladite extrémité (23).

4. Agencement selon l'une des revendications 1 ou 2, **caractérisé en ce que** le logement de réception (20) est réalisé d'une pièce avec le levier d'actionnement (21), ledit logement de réception (20) étant constitué d'une languette (27) s'étendant selon l'axe longitudinal principal du levier d'actionnement (21) à l'extrémité de sollicitation (23) dudit levier d'actionnement (21) et repliée sur elle-même pour former un logement tubulaire se trouvant sur une face du levier (21).

5. Agencement selon l'une des revendications 1 à 4, **caractérisé en ce que** l'organe de butée est une pièce rapportée sur le levier d'actionnement (21), tel qu'un pion fixé par collage, soudage, sur la face du levier d'actionnement où se trouve également le logement de réception (20).

6. Agencement selon l'une des revendications 1 à 4, **caractérisé en ce que** l'organe de butée est constitué d'une pièce avec le levier d'actionnement (21) sous forme d'un bossage ménagé en relief sur la face du levier d'actionnement (21) au voisinage de l'extrémité de sortie (202) du logement de réception (20).

7. Agencement selon l'une des revendications 1 à 4, **caractérisé en ce que** l'organe de butée est constitué d'une pièce avec le levier d'actionnement (21) sous forme d'une patte (28) qui s'étend en saillie selon l'axe longitudinal principal du levier (21) à l'extrémité de sollicitation (23) dudit levier (21) et pliée pour s'étendre de manière oblique en saillie sur la face du levier (21) dans laquelle se trouve également le logement de réception (20).

8. Agencement selon l'une des revendications 1 à 7, **caractérisé en ce que** le manchon (111) a un diamètre extérieur correspondant au diamètre intérieur du logement tubulaire (20), et un diamètre intérieur permettant l'entrée et le passage de l'embout (51) du câble de frein (5), le manchon (111) présentant ainsi une extrémité d'entrée (11E) pour l'embout (51), son autre extrémité dite de sortie (11S) étant pourvue d'au moins deux éléments (112) définissant entre eux un passage de diamètre correspondant au diamètre du câble de frein (5), ces éléments (112) étant élastiquement déformables et configurés pour constituer également des moyens de butée de l'élément de fixation (11) sur le levier d'actionnement (21).

9. Agencement selon l'une des revendications 1 à 7, **caractérisé en ce que** les éléments élastiquement déformables sont constitués d'au moins deux, de préférence cinq, pattes flexibles (112) s'étendant depuis une extrémité du manchon (111), chaque patte (112) s'étendant depuis le manchon (111) étant configuré pour définir avec les autres un passage dont le diamètre intérieur diminue depuis une valeur correspondant au diamètre intérieur du manchon (111) jusqu'à une section dont le diamètre correspond au diamètre du câble de frein (5).

10. Agencement selon l'une des revendications 8 ou 9, **caractérisé en ce que** l'extrémité de chacune des pattes (112) est conformée pour définir des moyens de butée de l'extrémité de sortie (11S) dont le diamètre extérieur est supérieur à celui de l'extrémité d'entrée (11E) de l'élément de fixation (11).

11. Frein à tambour de véhicule automobile, **caractérisé en ce qu'**il comporte un agencement pour le montage en aveugle sur un levier d'actionnement (21) du frein à tambour d'un câble de frein selon l'une des revendications 1 à 10.

12. Procédé de montage d'un agencement selon l'une des revendications 1 à 10, **caractérisé en ce qu'**il comporte une étape de montage dans laquelle l'élément de fixation (11) est inséré dans le logement de réception (20) du levier d'actionnement (21), l'extrémité d'entrée (11E) dudit élément de fixation (11) étant introduite dans le logement de réception (20) par son extrémité de sortie (202), tandis que l'extrémité de sortie (11S) présentant des moyens de butée vient en butée contre l'extrémité de sortie (202) du logement de réception (20).

13. Procédé d'assemblage en aveugle d'un câble de frein sur un frein à tambour comportant un agencement selon l'une des revendications 1 à 10, dans lequel on engage l'extrémité avant du câble munie d'un embout (51), à travers un trou (24) prévu dans une face externe du plateau (2) du frein à tambour (1), cette extrémité de câble (5) étant ensuite guidée par une gaine (26) portée par le plateau (2) du côté de sa face interne, vers l'extrémité de sollicitation (23) d'un levier d'actionnement (21), **caractérisé en ce qu'**on engage l'embout (51) du câble de frein (5) dans le logement de réception (20) prévu à l'extrémité de sollicitation (23) du levier d'actionnement (21), l'embout (51) du câble (5) s'engageant également dans l'élément de fixation (11) engagé dans ledit logement (20), l'embout (51) venant en butée contre l'extrémité de sortie (11S) dudit élément de fixation (11) et repoussant celui-ci jusqu'à ce qu'il vienne en butée contre un organe de butée (28) prévu sur le levier (21), l'extrémité de l'élément de fixation (11) en butée et retenue par l'organe de butée (28) étant en outre élastiquement déformable laissant passer l'embout (51) du câble sur lequel une poussée est exercée, et revenant en position à l'arrière dudit embout (51), une traction exercée alors sur le câble (5) ramenant l'embout (51) et l'élément de fixation (11) en butée contre l'extrémité de sortie (202) du logement de réception (20), l'extrémité du câble (5) étant ainsi fixée.

## Patentansprüche

1. Anordnung für die Blindmontage eines Bremsseils (5) an einem Betätigungshebel (21) einer Trommelbremse (1) eines Kraftfahrzeugs, das ein freies Ende aufweist, das mit einem Halteendstück (51) größeren Durchmessers als das Seil (5) versehen ist, wobei die Anordnung den Betätigungshebel (21) aufweist, der mit einem Vorspannende (23) versehen ist, an dem das freie Ende des Seil (5) befestigbar ist, um den Betätigungshebel (21) bei einem Ziehen des Bremsseils (5) zu schwenken, wobei der Betätigungshebel (21) ein Aufnahmegehäuse (20) für das freie Ende des Bremsseils (5) aufweist, wobei das Aufnahmegehäuse (20) ein Eingangsende (201) und ein Ausgangsende (202) für das Bremsseil und ein Befestigungselement (11) des freien Endes des Bremsseils (5) in dem Aufnahmegehäuse (20) aufweist, wobei das Befestigungselement aus einer Hülse (111), die in das Aufnahmegehäuse (20) eingesetzt und zum Einführen und Durchgehen des Endstücks (51) des Seils (5) durch die Hülse (111) und das Gehäuse (20) konfiguriert ist, und mindestens zwei Elementen (112) besteht, die zwischen sich einen Durchgang für das Bremsseil (5) definieren und elastisch verformbar sind, um den Durchgang und den Austritt des Endstücks (51) des Seils (5) zu ermöglichen und zum Seil (5) elastisch zurückgestellt zu werden, sobald das Endstück (51) durchgegangen ist, wobei die elastisch verformbaren Elemente (112) konfiguriert sind, um auch Anschlagmittel (1120) des Befestigungselements (11) am Ausgangsende (202) des Aufnahmegehäuses (20) zu bilden, **dadurch gekennzeichnet, dass** der Betätigungshebel (21) in der Nähe des Ausgangsendes (202) des Aufnahmegehäuses (20) ein Anschlagorgan (28) aufweist, das ausgebildet ist, um den Weg des Befestigungselements (11), das in dem Aufnahmegehäuse (20) befestigt ist, zwischen einer Position, in der die Anschlagmittel (1120) des Befestigungselements (11) an dem Ausgangsende (202) des Aufnahmegehäuses (20) anliegen, und einer Position zu begrenzen, in der die Anschlagmittel (1120) des Befestigungselements (11) teilweise an dem Anschlagorgan (28) anliegen, während dabei gleichzeitig das Durchgehen des Endstücks (51) des Bremsseils über das Befestigungselement (11) hinaus ermöglicht wird, wenn dieses an dem Anschlagorgan (28) anliegt.

2. Anordnung nach Anspruch 1, **dadurch gekennzeichnet, dass** das Aufnahmegehäuse (20) am Vorspannende (23) des Betätigungshebels (21) mit seiner Achse (Y) zwischen dem Eingang und dem Ausgang des Aufnahmegehäuses (20) vorgesehen ist, die sich hauptsächlich senkrecht zur Hauptachse (X) des Betätigungshebels (21) erstreckt.

3. Anordnung nach einem der Ansprüche 1 oder 2, **dadurch gekennzeichnet, dass** das Aufnahmegehäuse (20) ein Teil ist, das an dem Vorspannende (23) des Betätigungshebels (21) angebracht ist, wie beispielsweise ein röhrenförmiges Element, das an einer Seite des Endes (23) angeklebt oder angeschweißt ist.

4. Anordnung nach einem der Ansprüche 1 oder 2, **dadurch gekennzeichnet, dass** das Aufnahmegehäuse (20) einstückig mit dem Betätigungshebel (21) ausgebildet ist, wobei das Aufnahmegehäuse (20) aus einer Zunge (27), die sich entlang der Hauptlängsachse des Betätigungshebels (21) am Vorspannende (23) des Betätigungshebels (21) erstreckt, gebildet ist und auf sich selbst gefaltet ist, um ein röhrenförmiges Gehäuse zu bilden, das sich auf einer Seite des Hebels (21) befindet.

5. Anordnung nach einem der Ansprüche 1 bis 4, **dadurch gekennzeichnet, dass** das Anschlagorgan ein Teil ist, das an dem Betätigungshebel (21) angebracht ist, wie beispielsweise ein Stift, der durch Kleben, Schweißen an der Seite des Betätigungshebels befestigt ist, wo sich auch das Aufnahmegehäuse ( 20) befindet.

6. Anordnung nach einem der Ansprüche 1 bis 4, **dadurch gekennzeichnet, dass** das Anschlagorgan einstückig mit dem Betätigungshebel (21) in Form eines Vorsprungs ausgebildet ist, der im Relief auf der Seite des Betätigungshebels (21) in der Nähe des Ausgangsendes (202) des Aufnahmegehäuses (20) vorgesehen ist.

7. Anordnung nach einem der Ansprüche 1 bis 4, **dadurch gekennzeichnet, dass** das Anschlagorgan einstückig mit dem Betätigungshebel (21) in Form einer Lasche (28) ausgebildet ist, die sich entlang der Hauptlängsachse des Hebels (21) am Vorspannende (23) des Hebels (21) vorspringend erstreckt und umgebogen ist, um sich schräg auf der Seite des Hebels (21) vorspringend zu erstrecken, auf der sich auch das Aufnahmegehäuse (20) befindet.

8. Anordnung nach einem der Ansprüche 1 bis 7, **dadurch gekennzeichnet, dass** die Hülse (111) einen Außendurchmesser, der dem Innendurchmesser des röhrenförmigen Gehäuses (20) entspricht, und einen Innendurchmesser aufweist, der das Einführen und das Durchgehen des Endstücks (51) des Bremsseils (5) ermöglicht, wobei die Hülse (111) somit ein Eingangsende (11E) für das Endstück (51) aufweist, wobei ihr anderes Ausgangsende (11S) mit mindestens zwei Elementen (112) versehen ist, die zwischen sich einen Durchgang mit einem Durchmesser definieren, der dem Durchmesser des Bremsseils (5) entspricht, wobei diese Elemente (112) elastisch verformbar und konfiguriert sind, um auch Anschlagmittel des Befestigungselements (11) an dem Betätigungshebel (21) zu bilden.

9. Anordnung nach einem der Ansprüche 1 bis 7, **dadurch gekennzeichnet, dass** die elastisch verformbaren Elemente aus mindestens zwei, vorzugsweise fünf, flexiblen Laschen (112) gebildet sind, die sich von einem Ende der Hülse (111) erstrecken, wobei jede Lasche (112), die sich von der Hülse (111) erstreckt, konfiguriert ist, um mit den anderen einen Durchgang zu definieren, dessen Innendurchmesser von einem Wert, der dem Innendurchmesser der Hülse (111) entspricht, bis zu einem Abschnitt abnimmt, dessen Durchmesser dem Durchmesser des Bremsseils (5) entspricht.

10. Anordnung nach einem der Ansprüche 8 oder 9, **dadurch gekennzeichnet, dass** das Ende jeder der Laschen (112) ausgebildet ist, um Anschlagmittel des Ausgangsendes (11S) zu definieren, dessen Außendurchmesser größer als jener des Eingangsendes (11E) des Befestigungselements (11) ist.

11. Trommelbremse eines Kraftfahrzeugs, **dadurch gekennzeichnet, dass** sie eine Anordnung für die Blindmontage eines Bremsseils an einem Betätigungshebel (21) der Trommelbremse nach einem der Ansprüche 1 bis 10 aufweist.

12. Verfahren zur Montage einer Anordnung nach einem der Ansprüche 1 bis 10, **dadurch gekennzeichnet, dass** es einen Montageschritt aufweist, bei dem das Befestigungselement (11) in das Aufnahmegehäuse (20) des Betätigungshebels (21) eingefügt wird, wobei das Eingangsende (11E) des Befestigungselements (11) durch sein Ausgangsende (202) in das Aufnahmegehäuse (20) eingeführt wird, während das Ausgangsende (11S), das Anschlagmittel aufweist, an dem das Ausgangsende (202) des Aufnahmegehäuses (20) in Anlage kommt.

13. Verfahren zur Blindmontage eines Bremsseils an einer Trommelbremse, umfassend eine Anordnung nach einem der Ansprüche 1 bis 10, wobei das vordere Ende des Seils, das mit einem Endstück (51) versehen ist, durch ein Loch (24), das in einer Außenseite der Platte (2) der Trommelbremse (1) vorgesehen ist, eingesetzt wird, wobei dieses Ende des Seils (5) dann von einer Hülle (26), die von der Platte (2) auf der Seite seiner Innenseite getragen wird, in Richtung des Vorspannendes (23) eines Betätigungshebels (21) geführt wird, **dadurch gekennzeichnet, dass** das Endstück (51) des Bremsseils (5) in das Aufnahmegehäuse (20) eingesetzt wird, das am Vorspannende (23) des Betätigungshebels (21) vorgesehen ist, wobei das Endstück (51) des Seils (5) auch in das Befestigungselement (11) eingreift, das in das Gehäuse (20) eingesetzt wird, wobei das Endstück (51) an dem Ausgangsende (11S) des Befestigungselements (11) in Anlage kommt und dieses wegdrückt, bis es an einem Anschlagorgan (28), das auf dem Hebel (21) vorgesehen ist, in Anlage kommt, wobei das Ende des Befestigungselements (11), das an dem Anschlagorgan (28) in Anlage ist und davon gehalten wird, ferner elastisch verformbar ist, wodurch das Endstück (51) des Seils, auf das ein Druck ausgeübt wird, durchgehen kann und in die Position hinter dem Endstück (51) zurückkehrt, wobei ein Zug, der dann auf das Seil (5) ausgeübt wird, das Endstück (51) und das Befestigungselement (11) in Anlage an dem Ausgangsende (202) des Aufnahmegehäuses (20) zurückbringt, wobei das Ende des Seils (5) auf diese Weise befestigt wird.

## Claims

1. Arrangement for blind mounting, on an actuating lever (21) of a motor vehicle drum brake (1), of a brake cable (5) which includes a free end provided with a retaining end piece (51) having a larger diameter than the cable (5), the arrangement comprising the actuating lever (21) provided with a load end (23) on which the free end of the cable (5) can be fastened to cause the actuating lever (21) to pivot during a pulling of the brake cable (5), the actuating lever (21) having a receiving housing (20) for the free end of the brake cable (5), said receiving housing (20) having an entry end (201) and an exit end (202) for the brake cable and a fastening element (11) of said free end of the brake cable (5) in the receiving housing (20), the fastening element being constituted by a sleeve (111) engaged in the receiving housing (20) and configured for the introduction and the passage of the end piece (51) of the cable (5) through said sleeve (111) and the housing (20), and at least two elements (112) defining, between them, a passage for the brake cable (5) and elastically deformable in order to allow the passage and the exit of the end piece (51) of the cable (5) and be elastically returned towards the cable (5) once the end piece (51) has passed through, said elastically deformable elements (112) being configured to also constitute stop means (1120) of the fastening element (11) on the exit end (202) of the receiving housing (20), **characterized in that** the actuating lever (21) includes, in the vicinity of the exit end (202) of the receiving housing (20), a stop member (28) arranged to limit the travel of the fastening element (11) mounted in the receiving housing (20) between a position where the stop means (1120) of said fastening element (11) abut the exit end (202) of the receiving housing (20) and a position where said stop means (1120) of the fastening element (11) partially abut said stop member (28), while allowing the brake cable end piece (51) to pass beyond the fastening element (11), when the latter abuts said stop member (28).

2. Arrangement according to claim 1, **characterized in that** the receiving housing (20) is arranged at the load end (23) of the actuating lever (21) with its axis (Y) between the entry and the exit of the receiving housing (20) which extends principally perpendicularly to the main axis (X) of the actuating lever (21).

3. Arrangement according to one of claims 1 or 2, **characterized in that** the receiving housing (20) is a part attached to the load end (23) of the actuating lever (21), such as a tubular element bonded or welded on a face of said end (23).

4. Arrangement according to one of claims 1 or 2, **characterized in that** the receiving housing (20) is produced as one piece with the actuating lever (21), said receiving housing (20) being constituted by a tab (27) extending along the main longitudinal axis of the actuating lever (21) at the load end (23) of said actuating lever (21) and bent back on itself to form a tubular housing located on a face of the lever (21).

5. Arrangement according to one of claims 1 to 4, **characterized in that** the stop member is a part attached to the actuating lever (21), such as a pin fastened by bonding, welding, on the face of the actuating lever where the receiving housing (20) is also located.

6. Arrangement according to one of claims 1 to 4, **characterized in that** the stop member is constituted as one piece with the actuating lever (21) in the form of a projection made in relief on the face of the actuating lever (21) in the vicinity of the exit end (202) of the receiving housing (20).

7. Arrangement according to one of claims 1 to 4, **characterized in that** the stop member is constituted as one piece with the actuating lever (21) in the form of a leg (28) which extends projecting along the main longitudinal axis of the lever (21) at the load end (23) of said lever (21) and bent to extend obliquely in projection on the face of the lever (21) in which the receiving housing (20) is also located.

8. Arrangement according to one of claims 1 to 7, **characterized in that** the sleeve (111) has an external diameter corresponding to the internal diameter of the tubular housing (20) and an internal diameter allowing the entry and the passage of the end piece (51) of the brake cable (5), the sleeve (111) thus having an entry end (11E) for the end piece (51), its other end, called exit end (11S), being provided with at least two elements (112) defining, between them, a passage having a diameter corresponding to the diameter of the brake cable (5), these elements (112) being elastically deformable and configured to also constitute stop means of the fastening element (11) on the actuating lever (21).

9. Arrangement according to one of claims 1 to 7, **characterized in that** the elastically deformable elements are constituted by at least two, preferably five, flexible legs (112) extending from one end of the sleeve (111), each leg (112) extending from the sleeve (111) being configured to define, with the others, a passage the internal diameter of which decreases from a value corresponding to the internal diameter of the sleeve (111) up to a cross-section the diameter of which corresponds to the diameter of the brake cable (5).

10. Arrangement according to one of claims 8 or 9, **characterized in that** the end of each of the legs (112) is shaped to define stop means of the exit end (11S) the external diameter of which is greater than that of the entry end (11E) of the fastening element (11).

11. Motor vehicle drum brake, **characterized in that** it includes an arrangement for blind mounting, on an actuating lever (21) of the drum brake, of a brake cable according to one of claims 1 to 10.

12. Method for mounting an arrangement according to one of claims 1 to 10, **characterized in that** it includes a mounting step in which the fastening element (11) is inserted into the receiving housing (20) of the actuating lever (21), the entry end (11E) of said fastening element (11) being introduced into the receiving housing (20) by its exit end (202), while the exit end (11S) having stop means abuts the exit end (202) of the receiving housing (20).

13. Method for blind assembly of a brake cable on a drum brake including an arrangement according to one of claims 1 to 10, in which the front end of the cable equipped with an end piece (51) is engaged, through a hole (24) provided in an external face of the plate (2) of the drum brake (1), this cable end (5) being then guided by a cladding (26) borne by the plate (2) on the side of its internal face, towards the load end (23) of an actuating lever (21), **characterized in that** the end piece (51) of the brake cable (5) is engaged in the receiving housing (20) provided at the load end (23) of the actuating lever (21), the end piece (51) of the cable (5) also engaging in the fastening element (11) engaged in said housing (20), the end piece (51) abutting the exit end (11S) of said fastening element (11) and pushing the latter until it abuts a stop member (28) provided on the lever (21), the end of the fastening element (11) abutting and retained by the stop member (28) also being elastically deformable, allowing the end piece (51) of the cable on which a push is exerted to pass through, and returning to a position behind said end piece (51), a pull then exerted on the cable (5) bringing the end piece (51) and the fastening element (11) to abut the exit end (202) of the receiving housing (20), the cable end (5) thus being fastened.
